## Europäisches Patentamt
## European Patent Office
## Office européen des brevets

(11) Veröffentlichungsnummer: **0 154 892**
**B1**

(12) **EUROPÄISCHE PATENTSCHRIFT**

(45) Veröffentlichungstag der Patentschrift:
**01.06.88**

(21) Anmeldenummer: **85102185.7**

(22) Anmeldetag: **27.02.85**

(51) Int. Cl.⁴: **C 03 B 23/03,** C 03 B 27/04,
C 03 B 35/20, C 03 B 35/24

(54) **Anlage zum Herstellen von stark gekrümmten Glasscheiben.**

(30) Priorität: **28.02.84 DE 3407173**

(43) Veröffentlichungstag der Anmeldung:
**18.09.85 Patentblatt 85/38**

(45) Bekanntmachung des Hinweises auf die Patenterteilung:
**01.06.88 Patentblatt 88/22**

(84) Benannte Vertragsstaaten:
**AT BE CH DE FR GB IT LI LU NL SE**

(56) Entgegenhaltungen:
**US - A - 3 682 613**
**US - A - 4 204 853**
**US - A - 4 285 715**

(73) Patentinhaber: **Glasstemp of Toledo, Inc., Ampoint Industrial Park 995 Forthstreet, Perrysburg Ohio 43551 (US)**

(72) Erfinder: **Strauss, Gottfried, Dürerstrasse 24, D-5628 Heiligenhaus (DE)**

(74) Vertreter: **Lippert, Hans-Joachim, Dipl.-Ing. et al, Dipl.-Ing. W. Dahlke Dipl.-Ing. H.-J. Lippert Patentanwälte Frankenforster Strasse 137, D-5060 Bergisch Gladbach 3 (DE)**

## Beschreibung

, Die vorliegende Erfindung betrifft eine Anlage zum Herstellen von strak gekrümmten, vorgespannten Glasscheiben, insbesondere Automobilscheiben.

Zum Herstellen gekrümmter Glasscheiben sind im wesentlichen zwei Verfahren gebräuchlich, nämlich solche, die mit Gravitation arbeiten, sowie solche, bei denen das Glas in einer Biegepresse geformt wird.

Ein Verfahren der ersten Art wird in der US-Patentschrift 4 285 715 beschrieben. Die Biegung der Glasscheibe erfolgt hierbei durch das Eigengewicht des auf dem Biegerahmen liegenden Glases nach Erweichen desselben. Dieses Verfahren gestattet jedoch nur eine begrenzte Biegung und ist deshalb nur für bestimmte Anwendungsfälle geeignet. Insbesondere sehr dünne Glasscheiben mit geringen Biegeradien können nach diesem Verfahren erzeugt werden.

Ein Verfahren, bei dem das Glas in einer Biegepresse geformt wird, wird in der US-Patentschrift 4 204 853 beschrieben. Bei diesem Verfahren wird die zu biegende Glasscheibe in verschiedenen Heizstationen erhitzt und in eine Biegepresseneinrichtung mit einer festgelegten Oberflächenkrümmung der Matrizen befördert. Nach dem Biegepressen wird die Glasscheibe über Förderer in eine separate Kühleinrichtung gefördert und dort abgekühlt. Der Nachteil dieses Verfahrens ist darin zu sehen, dass der Transport von einer Behandlungsstufe zur anderen aufwendig ist. Desweiteren ist ein toleranzgenaues Biegen nur dann möglich, wenn die ebene Glasscheibe genauestens positioniert in die Transportvorrichtung eingehängt wird.

In der US-Patentschrift 3 682 613 wird eine Biegepresse für Spezialglasscheiben beschrieben, die unterschiedliche Krümmungsradien aufweisen. Dies wird mit Hilfe einer verstellbaren Matrize in Verbindung mit einer Vakuumpumpe erreicht. Auch bei diesem Verfahren muss die gebogene Glasscheibe in erhitztem Zustand in einen separaten Kühlbereich gefördert werden. Aufgabe der vorliegenden Erfindung ist es, eine Anlage mit hoher Leistungsfähigkeit zum Herstellen von gekrümmten Glasscheiben zu schaffen, die die vorstehend genannten Nachteile nicht aufweist und die insbesondere zum Herstellen von stark gekrümmten Scheiben geeignet ist. Zur Lösung der Aufgabe werden die im Anspruch 1 beschriebenen Anlagenteile in der ebenfalls beschriebenen Anordnung vorgeschlagen. Durch die Erfindung ergibt sich eine universell einsetzbare Anlage, deren erfinderischer Schwerpunkt auf der Kombination der Biegepresse mit der Kühlstation liegt, die den Transport der gebogenen Glasscheibe in die Kühlstation entbehrlich macht. Das Positionieren der Glasscheibe in Bezug auf die Biegevorrichtung erfolgt in einfacher Weise innerhalb der Heizvorrichtung mit Hilfe der Hebevorrichtung; dadurch entfallen die beim Stand der Technik als nachteilig empfundenen Zangenpunkte im fertigen Glas und das Ausrichten der Glasscheibe zur Biegevorrichtung gestaltet sehr einfach.

Die Biegevorrichtung selbst ist nach einer bevorzugten Ausgestaltung durch einen palettenartigen Grundrahmen gekennzeichnet, auf dem die die Form der gekrümmten Glasscheibe bestimmenden einstellbaren Biegeauflagen sowie jeweils in den Zwischenraum zwischen zwei benachbarten Biegeauflagen hineinbewegbare Kühlsegmente mit gegen die Oberfläche der aufliegenden Glasscheibe gerichteten Düsen angeordnet sind, und auf dem ausserdem Einrichtungen zur Verteilung der Kühlluft zu den Düsen der Kühlsegmente sowie die Antriebe für die bewegbaren Kühlsegmente vorgesehen sind.

Mit Hilfe des palettenartigen Grundrahmens lässt sich die Biegevorrichtung mit den Kühleinrichtungen komplett in die Heizvorrichtung hineinbewegen, wo die zwischenzeitlich mit Hilfe der Hebevorrichtung angehobene Glasscheibe positioniert übernommen wird. Anschliessend wird die Biegevorrichtung mit dem palettenartigen Grundrahmen aus der Heizvorrichtung heraus unmittelbar unter den Biegestempel transportiert. Der kurze Aufenthalt in der Heizvorrichtung schadet den auf dem Grundrahmen angeordneten Verstellantrieben und Kühleinrichtungen nicht, so dass unmittelbar nach dem Biegevorgang, der durch Absenken des vertikalen Biegestempels eingeleitet wird, der Kühlvorgang einsetzen kann. Zu diesem Zweck sind die Kühlsegmente stets mit einer Luftzufuhrleitung verbunden, durch die Kühlluft in die Kühlsegmente eingebracht wird.

Nach einer weiteren Ausführung sind die Kühlsegmente in seitlichen Führungen quer zur Ebene der aufliegenden Glasscheibe mit Hilfe von Verstellspindelantrieben bewegbar, und zwar von einer Endlage unterhalb der Biegeauflagen in eine zweite Endlage in der die mit den Düsen versehene Oberseite der Kühlsegmente mit den Oberseiten der Biegeauflagen im wesentlichen eine Biegeebene bilden. Unmittelbar vor dem Einsetzen des Kühlvorganges werden die Kühlsegmente von der Glasscheibe zurückgefahren und beide Seiten der Glasscheibe werden mit Kühlluft beaufschlagt, bis die Glasscheibe hinreichend abgekühlt ist. Die Scheibe wird dann der Biegevorrichtung entnommen. Die Biegevorrichtung ist somit für die Übernahme der nächstfolgenden Glasscheibe innerhalb der Heizvorrichtung bereit.

Ein Ausführungsbeispiel der Erfindung ist in der Zeichnung dargestellt und wird nachfolgend beschrieben. Es zeigt:

Fig. 1 einen Längsschnitt durch die Heizvorrichtung im Bereich der Vakuum-Hebevorrichtung,

Fig. 2 einen Querschnitt durch die Heizvorrichtung sowie den Biegestempel und die Biegevorrichtung,

Fig. 3 eine perspektivische Ansicht der Biegevorrichtung,

Fig. 4 eine vergrösserte Darstellung der Biegeauflage und Kühlsegmente und

Fig. 5 einen Querschnitt durch die Biegevorrichtung und die Verstellantriebe.

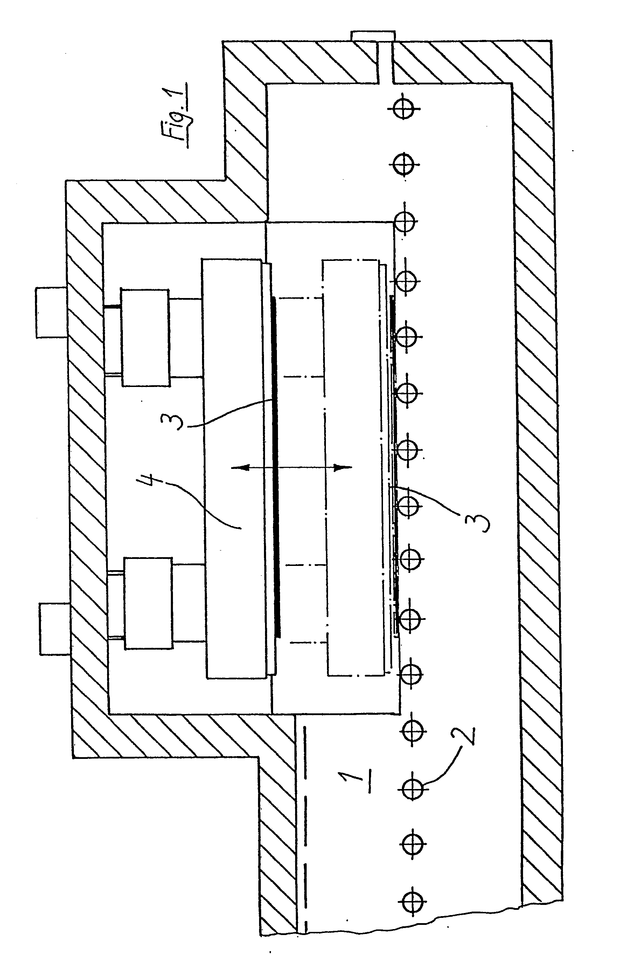

In Fig. 1 ist mit 1 die Heizvorrichtung bezeichnet, die als Ofen in bekannter Weise ausgebildet ist. Durch die Heizvorrichtung 1 hindurch verläuft der Rollenförderer 2, auf dem die Glasscheibe 3 mit Hilfe der angetriebenen Förderrollen unter die Vakuum-Hebevorrichtung, die bei 4 schematisch angedeutet ist, transportiert werden können. Die Vakuum-Hebevorrichtung 4 kann die Glasscheibe 3 aus der strichpunktiert gezeichneten Lage vom Rollenförderer 2 in die gezeichnete Position anheben.

Die genaue Positionierung der Glasscheibe auf dem Rollenförderer 2 unterhalb der Vakuum-Hebevorrichtung 4 kann mit herkömmlichen Mitteln (nicht dargestellt) erfolgen.

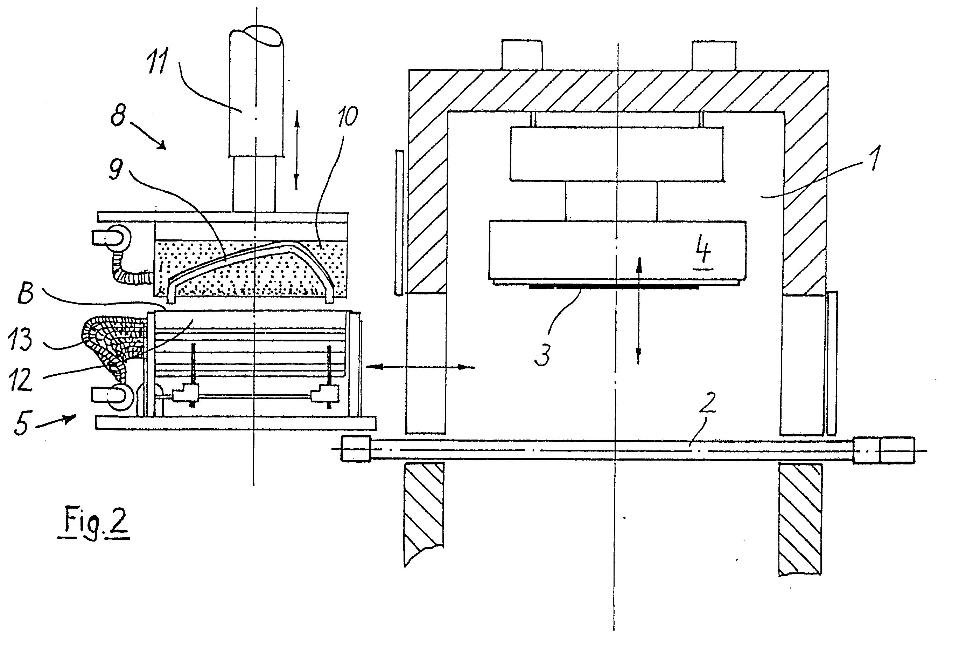

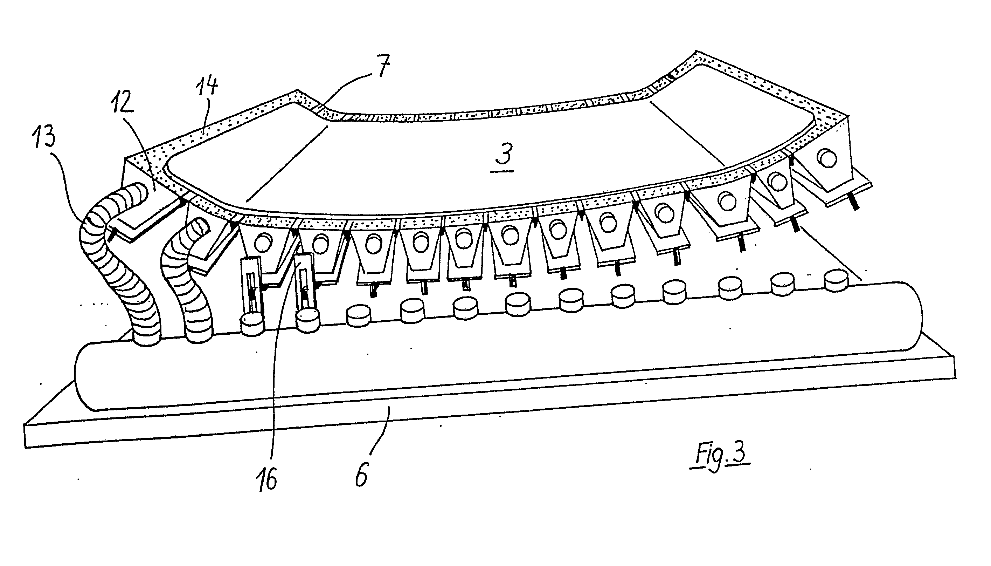

In Fig. 2 ist ein Querschnitt durch die Heizvorrichtung sowie di daneben angeordnete Biegevorrichtung dargestellt. Die eigentliche Biegevorrichtung besteht aus dem Grundrahmen 6, auf dem die die Biegeebene B bildenden einstellbaren Biegeauflagen 7 und Kühlsegmente 12 (Fig. 3) angeordnet sind. Die Biegevorrichtung wird nachfolgend noch näher beschrieben.

Oberhalb der Biegevorrichtung 5 ist der Biegestempel 8 dargestellt, der in bekannter Weise aus einer Rahmenform 9 besteht, die auf einem Düsenblech 10 befestigt ist. Düsenblech 10 und Rahmenform 9 sind mit Hilfe einer Verfahreinrichtung 11 heb- und senkbar

Die Biegevorrichtung 5 ist in Pfeilrichtung durch die geöffnete Ofentür oberhalb des Rollenförderers 2 in die Heizvorrichtung 1 ein- und ausfahrbar, und zwar in eine Position unterhalb der an der Vakuum-Hebevorrichtung 4 hängenden Glasscheibe 3. Die genaue Lage der Biegevorrichtung wird durch nicht dargestellte Anschläge festgelegt.

Nachdem die Biegevorrichtung 5 ihre Lage in der Heizvorrichtung 1 eingenommen hat, wird die Scheibe 3 mittels der Vakuum-Hebevorrichtung 4 abgesenkt und auf die Biegeauflage 7 abgelegt. Anschliessend fährt die Biegevorrichtung 5 zusammen mit der aufliegenden Glasscheibe 3 aus der Heizvorrichtung 1 heraus unter den angehobenen Biegestempel 8.

Durch Herunterfahren des Biegestempels 8 wird die Glasscheibe 3 zwischen der Rahmenform 9 und der aus den Biegeauflagen 7 und den Düsenblechen 14 gebildeten Biegeebene B in Form gebracht.

Um den Vorspannprozess einzuleiten, fährt der Biegestempel 8 um einen geringen Betrag nach oben und gleichzeitig werden die nachfolgend noch näher beschriebenen Kühlsegmente von der Glasscheibenoberfläche zurückbewegt. Unmittelbar anschliessend wird die Glasscheibenoberfläche durch Kühlluft beaufschlagt, die durch die Düsenbleche 10 und 14 austritt.

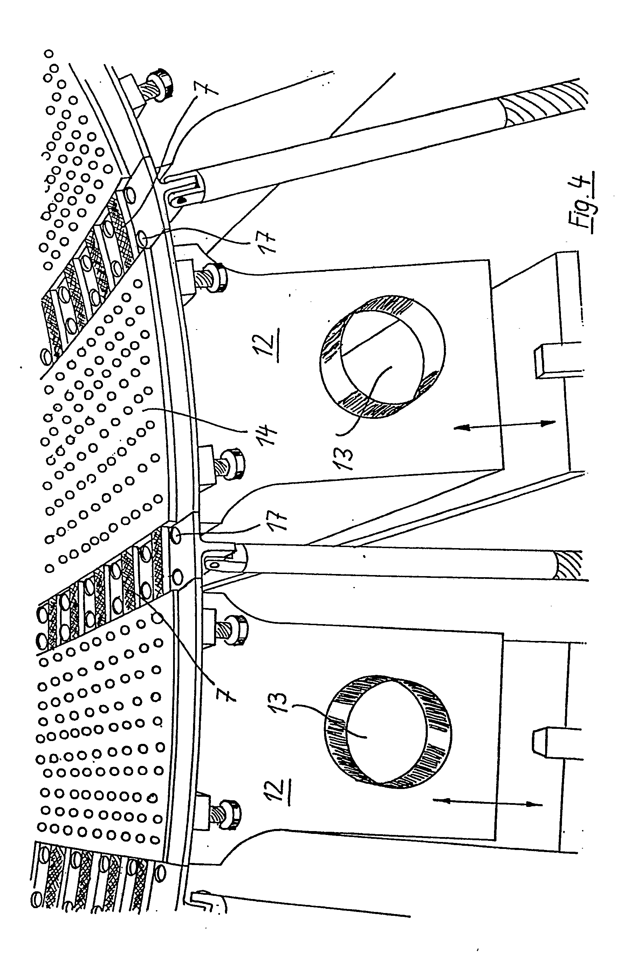

Wie in Fig. 3 und 4 erkennbar, wird die Biegeebene B der Biegevorrichtung 5 aus den abwechselnd nebeneinander liegenden Biegeauflagen 7 und den Kühlsegmenten 12 gebildet. Die Biegeebene B ist einstellbar. Die Kühlsegmente 12 sind über die Anschlüsse 13 mit Kühlluft beaufschlagbar, die aus dem Düsenblech 14 austritt.

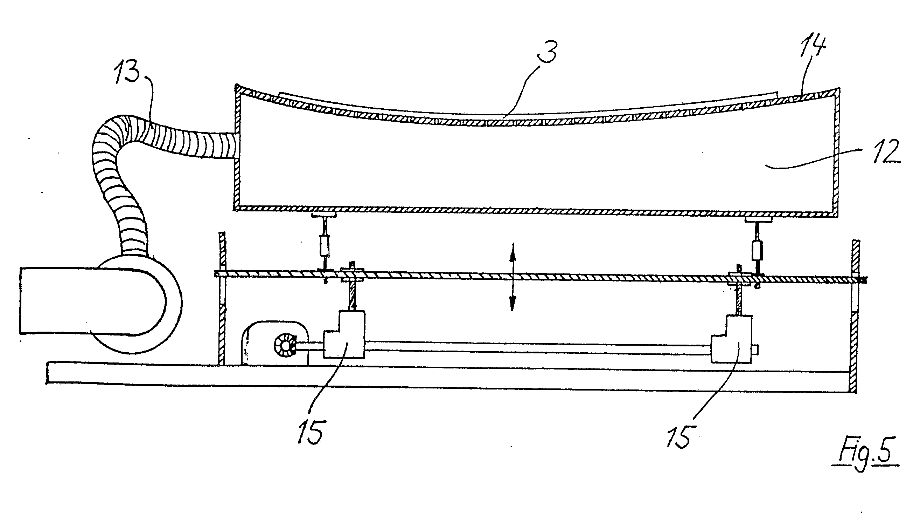

Fig. 5 zeigt ein Kühlsegment 12 im Schnitt vor dem Beginn des Vorspannens durch Aufblasen von Kühlluft. Die Glasscheibe 3 liegt dabei auf den in dieser Figur nicht erkennbaren Biegeauflagen 7 und auf den Düsenblechen 14 der Kühlsegmente 12 auf. Durch Abwärtsbewegen der Kühlsegmente 12 mit Hilfe von Spindeltrieben 15 wird ein Abstand zwischen den Düsenblechen 14 und der Glasscheibenoberfläche hergestellt, der benötigt wird, um die Scheibe vorspannen zu können. Zur gleichen Zeit wird durch die Düsenbleche 10 des Biegestempels 8 ebenfalls Kühlluft auf die Glasoberfläche gerichtet.

Nach Abschluss des Vorspannprozesses kann die Glasscheibe 3 der Biegevorrichtung 5 entnommen werden. Die Biegevorrichtung 5 ist zur Übernahme einer neuen Glasscheibe 3 bereit und kann zu diesem Zweck erneut in die Heizvorrichtung 1 eingefahren werden.

Um die Leistung der Vorrichtung bei Bedarf zu erhöhen, kann eine identische zweite Biegevorrichtung auf der anderen Seite der Heizvorrichtung 1 angeordnet sind, die zu diesem Zweck mit beidseitigen Ofentüren versehen ist. Beide Biegevorrichtungen können im Wechseltakt die Bearbeitungszeit halbieren.

**Patentansprüche**

1. Anlage zum Herstellen von stark gekrümmten, vorgespannten Glasscheiben, insbesondere Automobilscheiben, bestehend aus

a) einem horizontalen kontinuierlichen Förderer (2) zum Transport der ebenen Glasscheibe (3) in eine Heizvorrichtung (1) zum Erweichen des Glases,

b) einer Vakuumhebevorrichtung (4) zum Abheben der erweichten Glasscheibe (3) vom Förderer (2) innerhalb der Heizvorrichtung (1),

c) einer unter die abgehobene Glasscheibe (3) horizontal in die Heizvorrichtung (1) hineinbewegbare Biegevorrichtung (5), auf die die erweichte Glasscheibe (3) absenkbar ist,

d) einem vertikalen Biegestempel (8) ausserhalb und unmittelbar neben der Heizvorrichtung (1), unter den die aus der Heizvorrichtung herausbewegbare Biegevorrichtung (5) zusammen mit der positionierten erweichten Glasscheibe (3) transportierbar ist und

e) Kühlmittelanschlüssen (13) sowohl an der Biegevorrichtung (5) als an dem Biegestempel (8) zum Abkühlen der gebogenen Glasscheibe (3) innerhalb der Biegevorrichtung (5) unterhalb des Biegestempels (8).

2. Anlage zum Herstellen von stark gekrümmten, vorgespannten Glasscheiben nach Anspruch 1, wobei die Biegevorrichtung einen palettenartigen Grundrahmen (6) aufweist, auf dem die die Form der gekrümmten Glasscheibe bestimmenden einstellbaren Biegeauflagen (7) sowie jeweils in den Zwischenraum zwischen zwei benachbarte Biegeauflagen (7) hineinbewegbare Kühlsegmente (12) mit gegen die Oberfläche der aufliegenden Glasscheibe (3) gerichteten Düsen (14) angeordnet sind und auf dem ausserdem Einrichtungen zur Verteilung der Kühlluft zu den Düsen der Kühlsegmente sowie die Antriebe (15) für die bewegbaren Kühlsegmente (12) vorgesehen sind.

3. Anlage zum Herstellen von stark gekrümmten, vorgespannten Glasscheiben nach Anspruch 2, wobei die Biegevorrichtung Kühlsegmente 12 aufweist, die in seitlichen Führungen (16) quer zur Biegeebene (B) der aufliegenden Glasscheibe (3) mit Hilfe von Verstellspindelantrieben (15) bewegbar sind, und zwar von einer Endlage unterhalb der Biegeauflagen (7) in eine zweite Endlage, in der die mit den Düsen (14) versehene Oberseite der Kühlsegmente (12) mit den Oberseiten der Biegeauflagen (7) im wesentlichen eine Biegeebene (B) bilden.

4. Anlage zum Herstellen von stark gekrümmten, vorgespannten Glasscheiben nach Anspruch 2 und 3, wobei die Biegeauflagen (7) mit einem hitzebeständigen Gewebe überzogen und derartig geformt sind, dass sie die entsprechend geformten Kantenbereiche der Kühlsegmente überlappen.

5. Anlage zum Herstellen von stark gekrümmten, vorgespannten Glasscheiben nach Anspruch 1 bis 4, wobei die Biegevorrichtung mit Biegeauflagen versehen ist, die Öffnungen (17) aufweisen, durch die mindestens ein Teil der Kühlluft absaugbar ist.

**Revendications**

1. Installation pour la fabrication de plaques de verre trempé à forte courbure, en particulier de vitres pour automobiles constituée par

a) un transporteur (2) horizontal continu pour le transport de la plaque de verre (3) plane dans un dispositif de chauffage (1) pour ramollir le verre,

b) un disposetif (4) de levage sous vide pour soulever du transporteur (2) la plaque de verre (3) ramollie à l'intérieur du dispositiv de chauffage (1),

c) un dispositif de cintrage (5) pouvant être amené, par déplacement horizontal, dans le dispositif de chauffage (1), sous la plaque de verre (3) soulevée, dispositif de cintrage sur lequel la plaque de verre (3) ramollie peut être descendue,

d) un poinçon de cintrage (8) vertical situé à l'extérieur et directement à côté du dispositif de chauffage (1), poinçon sous lequel le dispositif de cintrage (5), qui peut être sorti du dispositif de chauffage, est transportable conjointement avec la plaque de verre (3) ramollie positionnée, et

e) des raccords (13) pour agent réfrigérant disposés aussi bien sur le dispositif de cintrage (5) que sur le poinçon de cintrage (8), pour refroidir la plaque de verre (3) cintrée à l'intérieur du dispositif de cintrage (5), sous le poinçon de cintrage (8).

2. Installation pour la fabrication de plaques de verre trempé à forte courbure, selon la revendication 1, dans laquelle le dispositif de cintrage présente un bâti (6) du type palette, sur lequel sont disposés les appuis de cintrage (7) réglables, déterminant la forme de la plaque de verre courbée, ainsi que des segments de refroidissement (12) pouvant être amenés dans chaque interstice formé entre deux appuis de cintrage (7) voisins, avec des buses (14) dirigées vers la surface de la plaque de verre (3) reposant sur le dispositif de cintrage, bâti sur lequel sont prévus en outre des dispositifs pour distribuer l'air de refroidissement dans les buses des segments de refroidissement ainsi que les entraînements (15) pour les segments de refroidissement (12) mobiles.

3. Installation pour la fabrication de plaques de verre trempé à forte courbure, selon la revendication 2, dans laquelle le dispositif de cintrage présente des segments de refroidissement (12), qui sont mobiles dans des glissières latérales (16) perpendiculairement au plan de cintrage (B) de la plaque de verre (3) reposant sur ce plan, au moyen d'entraînements par tige de réglage (15), et ceci depuis une position terminale audessous des appuis de cintrage (7) jusque dans une deuxième position terminale, dans laquelle les faces supérieures, munies de buses (14), des segments de refroidissement (12) forment pratiquement un plan de cintrage (B) avec les faces supérieures des appuis de cintrage (7).

4. Installation pour la fabrication de plaques de verre trempé à forte courbure, selon la revendication 2 ou 3, dans lequel les appuis de cintrage (7) sont revêtus d'un tissu thermorésistant et présentent une forme telle qu'ils recouvrent les bords de forme correspondante des segments de refroidissement.

5. Installation pour la fabrication de plaques de verre trempé à forte courbure, selon les revendications 1 à 4, dans laquelle le dispositif de cintrage est muni d'appuis de cintrage, qui présentent des orifices (17) par lesquels au moins une partie de l'air de refroidissement peut être aspirée.

**Claims**

1. Installation for producing highly curved tempered glass sheets, in particular automobil glass sheets, consisting of

a) a horizontal continuous conveyor (2) for transporting the plane glass sheet (3) into a heating device (1) for softening of the glass,

b) a vauum lifting device (4) for lifting the softened glass sheet (3) from the conveyor (2) within the heating device (1),

c) a bending device (5) movable in horizontal direction into the heating device (1) beneath the lifted glass sheet (3), on which the softened glass sheet (3) can be lowered,

d) a vertical bending die (8) outside of and directly adjacent to the heating device (1), beneath said bending die (8) said bending device (5), movable out of the heating device, together with the positioned softened glass sheet (3) being transportable, and

e) coolant connections (13) at the bending device (5) as well as at the bending die (8) for cooling the bent glass sheet (3) inside the bending device (5) beneath the bending die (8).

2. Installation for producing highly curved tempered glass sheets according to claim 1, whereby the bending device has a palet-like mount base (6) on which the adjustable bending supports (7) determining the form of the curved glass sheet as well as cooling segments (12) with nozzles (14), directed against the surface of the supported glass sheet (3), are arranged, each of said cooling segments (12) being movable into the space between two adjacent bending supports (7), and on which furthermore means for supplying the cooling air to the nozzles, of the cooling segments as well as drive means (15) for the movable cooling segments (12) are provided.

3. Installation for producing highly curved tempered glass sheets according to claim 2, whereby the bending device has cooling segments (12), being movable by means of adjusting spindle drives (15), in lateral guide ways (16) transversely to the bending plane (B) of the supported glass sheet (3) from a first end position beneath the bending supports (7) to a second end position in which the upper surface of the cooling segments (12), provided with the nozzles (14), and the upper surfaces of the bending supports (7) essentially from a bending plane (B).

4. Installation for producing highly curved tempered glass sheets according to claims 2 and 3, whereby the bending supports (7) are coated by a heat resistent tissue and are formed into a shape in which they overlap the correspondingly formed edge portions of the cooling segments.

5. Installation for producing highly curved tempered glass sheets according to claims 1 to 4, whereby the bending device is provided with bending supports, having openings (17), through which at least a part of the cooling air is exhaustable.

Fig. 1

1/5

Fig.2

0 154 892

Fig. 3

0 154 892

12  13  7  17  14  12  17  7

4/5

Fig. 4

Fig.5

0 154 892